# EUROPÄISCHE PATENTSCHRIFT

(11) **EP 0 321 697 B1**
(45) Veröffentlichungstag und Bekanntmachung des Hinweises auf die Patenterteilung: **19.01.1994**
(21) Anmeldenummer: 88119091.2
(22) Anmeldetag: 17.11.1988
(51) Int. Cl.: F16F 15/12

(54) **Geteiltes Schwungrad**
Two-piece flywheel
Volant d'inertie en deux parties

(30) Priorität: 23.12.1987 DE 3743801
(43) Veröffentlichungstag der Anmeldung: 28.06.1989
(73) Patentinhaber: DAIMLER-BENZ AKTIENGESELLSCHAFT, 70327 Stuttgart (DE)
(72) Erfinder: Wörner, Günter, D-7053 Kernen (DE); Tscheplak, Ernst, D-7056 Weinstadt 1 (DE)

(56) Entgegenhaltungen:
- FR-A- 2 576 654
- FR-A- 2 593 871
- FR-A- 2 601 104
- SAE TRANSACTIONS. 23 Februar 1987, NEW YORK US Seiten 1 - 10; A.Sebulke: "TheTwo-Mass Flywheel-A Torsional Vibration Damper for the Power Train ofPassengerCars"

## Beschreibung

Die Erfindung betrifft ein geteiltes Schwungrad mit zwei gleichachsigen Schwungradelementen, auf die die Schwungradmassen im wesentlichen aufgeteilt sind, wobei am einen Schwungradelement ein zentraler Axialfortsatz bzw. Nabenteil angeordnet ist, auf dem unter Zwischenschaltung eines Lagers das andere Schwungradelement drehgelagert ist, sowie mit einer zwischen die Schwungradelemente geschalteten Federanordnung mit einer Federgruppe aus langhubigen Schraubenfedern, welche eine kreisbogenförmige Schraubenachse mit in die Schwungradachse fallendem Krümmungszentrum aufweisen, nicht bzw. vernachlässigbar vorgespannt sind und mit fliehkraftabhängiger Reibung arbeiten, indem diese Federn von der Fliehkraft gegen die Federn relativ zur Schwungradachse nach radial außen abstützende Lagerflächen gedrängt werden, wobei die Federkonstanten dieser Federn derart bemessen sind, daß die bei geringer Motordrehzahl auftretenden Schwingungen im überkritischen Bereich liegen, sowie mit einer zwischen einem Schwungradelement und einem Widerlagerteil der Federanordnung angeordneten kraftschlüssigen Kupplung, welche in Reihe zur Federanordnung angeordnet ist.

Ein derartiges Schwungrad ist aus dem Artikel von A. Sebulke in SAE TRANSACTIONS, 23. Februar 1987, New York, U.S.A., Seiten 1 bis 10, bekannt, vgl. dort insbesondere die Fig. 18 auf Seite 10. Hierbei bilden die langhubigen Federn die einzige zwischen den Schwungradelementen angeordnete Federanordnung, welche aufgrund ihrer fliehkraftabhängigen Reibung die Schwungradelemente bei zunehmender Drehzahl mit zunehmender, durch Reibung verursachter Steifigkeit koppelt.

Aus der FR-A 26 01 104 ist (vgl. die Fig. 14 und 15) ein weiteres Schwungrad der eingangs angegebenen Art bekannt, bei dem neben langhubigen Federn, welche zwangsläufig mit stark fliehkraftabhängiger Reibung arbeiten, kurzhubige Federn parallel zu den vorgenannten Federn angeordnet sind, und zwar derart, daß sie im wesentlichen als nachgiebige Anschläge wirken, wenn der Federhub der langhubigen Federn aufgezehrt wird.

Auch hier können sich bei höheren Drehzahlen die die Hauptmassen des Schwungrades bildenden Schwungradelemente nur dann relativ zueinander bewegen, wenn die fliehkraftabhängige Reibung der langhubigen Federn überwunden wird.

Durch die langhubigen Federn läßt sich eine sehr niedrige Resonanzfrequenz erreichen, welche dementsprechend praktisch nur beim Starten des Motors angeregt werden kann. Denn die bei laufendem Motor auftretenden Schwingungen liegen bereits in der Regel oberhalb der Resonanzfrequenz, d.h. im sogenannten überkritischen Bereich.

An sich besitzen sehr langhubige Federanordnungen aufgrund ihrer vergleichsweise geringen Steifheit im Fahrbetrieb den Nachteil, daß bei Lastwechseln vergleichsweise große Relativbewegungen zwischen den Schwungradelementen auftreten können. Denn aufgrund der beim Fahrbetrieb zu übertragenden Drehmomente muß die Federanordnung in der jeweiligen Belastungsrichtung entsprechend verspannt werden. Dazu ist bei weichen Federanordnungen eine größere Relativverdrehung zwischen den Schwungradelementen notwendig. Dementsprechend müssen sich die Schwungradelemente bei Lastwechseln außerordentlich weit zueinander drehen, bis wiederum ein hinreichend großes Drehmoment in der jeweils entgegengesetzten Lastrichtung übertragen werden kann. Durch die fliehkraftabhängige Reibung der langhubigen Federn wird dieser Effekt zumindest bei höheren Drehzahlen deutlich gemindert, da dann eine Relativdrehung zwischen den Schwungradelementen nur gegen erhebliche Reibung erfolgen kann. Sollten bei geringeren Drehzahlen Lastwechsel auftreten, so sind die damit verbundenen Relativdrehungen zwischen den Schwungradelementen vergleichweise gering, weil übliche Verbrennungsmotoren bei geringen Drehzahlen nur vergleichsweise geringe Drehmomente zu erzeugen vermögen.

Aufgabe der Erfindung ist es nun, bei einem Schwungrad der eingangs angegebenen Art das Betriebsverhalten noch weiter zu verbessern.

Diese Aufgabe wird erfindungsgemäß dadurch gelöst, daß zusätzlich zu der aus den langhubigen Federn bestehenden Federgruppe eine dazu in Reihe geschaltete weitere Federgruppe mit relativ kurzhubigen Federn angeordnet ist, welche mit fliehkraftunabhängiger Reibung arbeiten, daß die langhubigen Federn reibschlüssig mit dem einen Schwungradelement gekuppelte Widerlager besitzen, daß in einer Ebene axial zwischen den Widerlagern eine Zwischenträgerscheibe angeordnet ist, welche mit radialen Teilen die Stirnenden der langhubigen Federn überlappt und über die anderen Federn mit dem anderen Schwungradelement gekoppelt sowie mit einem Reibring bzw. ringförmig angeordneten Reibteilen verbunden ist, indem der Reibring bzw. die Reibteile mit in Achsrichtung des Schwungrades erstreckten Fortsätzen in Aussparungen der Zwischenträgerscheibe eingreifen, daß die innere Lagerschale des Lagers axial gegen einen am Axialfortsatz bzw. Nabenteil angeordneten Ringsteg, Ringflansch od.dgl. gespannt ist, indem der Reibring bzw. die Reibteile axial zwischen zwei auf dem Axialfortsatz bzw. Nabenteil axial verschiebbaren Druckringen bzw. weiteren Reibringen angeordnet sind, und daß einer dieser Druckringe bzw. weiteren Reibringe mittels eines Tellerfederringes in Richtung des jeweils anderen Druckringes bzw. weiteren Reibringes gespannt ist, wobei der Tellerfederring entweder zwischen der inneren Lagerschale des Lagers und dem dazu benachbarten einen Druckring bzw. einen weiteren Reibring oder zwischen einem Teil des einen Schwungradelementes und dem anderen Druckring bzw. anderen weiteren Reibring eingespannt ist, so daß der Reibring sowie die Druckringe bzw. die weiteren Reibringe unter gleichzeitiger Sicherung der Lage der Lagerschale axial gegeneinander gespannt werden.

Durch die erfindungsgemäß vorhandenen zusätzlichen kurzhubigen Federn, welche in Reihe zu den langhubigen Federn angeordnet sind und weitestgehend ohne fliehkraftabhängige Reibung arbeiten, wird erreicht, daß die beiden die Hauptmassen des Schwungrades bildenden Schwungradelemente auch bei höheren Drehzahlen relativ zueinander vergleichweise frei schwingen können, obwohl bei derartigen Drehzahlen die langhubigen Federn aufgrund starker Fliehkräfte mit großer Kraft auf angrenzenden Teilen des Schwungrades aufliegen und dementsprechend diese angrenzenden Teile kraftschlüssig miteinander verbinden und damit relativ zueinander weitestgehend starr festhalten.

Bei niedrigen Drehzahlen wird also beim erfindungsgemäßen Schwungrad durch die langhubigen Federn die Möglichkeit erreicht, daß die Schwungradelemente relativ zueinander langhubige Schwingungen mit niedriger Frequenz ausführen können, wobei die kurzhubigen Federn von untergeordnetem Einfluß sind.

Bei höheren Drehzahlen werden die langhubigen Federn praktisch "starr" geschaltet, gleichwohl ermöglichen die kurzhubigen Federn noch ein Schwingen der Schwungradelemente und dementsprechend eine gute schwingungsmäßige Entkopplung von Eingangsseite und Ausgangsseite des Schwungrades.

Im übrigen wird aufgrund der erfindungsgemäßen Bauart gewährleistet, daß die Nachgiebigkeit der Federanordnung ingesamt mit zunehmender Drehzahl abnimmt und dementsprechend übermäßige Relativdrehungen zwischen den Schwungradelementen vermieden werden, wenn bei höheren Drehzahlen und erhöhten übertragenen Drehmomenten Lastwechsel auftreten.

Im übrigen wird hinsichtlich bevorzugter Ausführungsformen der Erfindung auf die Unteransprüche sowie die nachfolgende Erläuterung der Erfindung anhand der Zeichnung verwiesen.

Dabei zeigt
- Fig. 1: einen Axialschnitt des erfindungsgemäßen Schwungrades,
- Fig. 2: eine teilweise aufgerissene Frontansicht des in Fig. 1 gezeigten Schwungrades entsprechend dem Pfeil I und
- Fig. 3: ein Funktionsschema des in den Fig. 1 und 2 dargestellten Schwungrades.

Bei dem dargestellten Schwungrad ist das Schwungradelement 1 mit dem Motor und das Schwungradelement 2 über eine nicht dargestellte Kupplung mit einem Antriebsstrang antriebsmäßig verbunden.

Das Schwungradelement 1 besitzt ein Nabenteil 4, auf dem das Schwungradelement 2 mittels eines Rillenkugellagers 3 gelagert ist.

Das Schwungradelement 1 besteht im wesentlichen aus zwei Teilen, einem mit dem Nabenteil 4 einstückig verbundenen Teil 1' sowie einem ringscheibenförmigen Teil 1'', welcher am Teil 1' mittels kranzförmig angeordneter Schrauben angeflanscht ist. Zwischen den Teilen 1' und 1'' des Schwungradelementes 1 verbleibt ein zum Nabenteil 4 hin offener Ringraum.

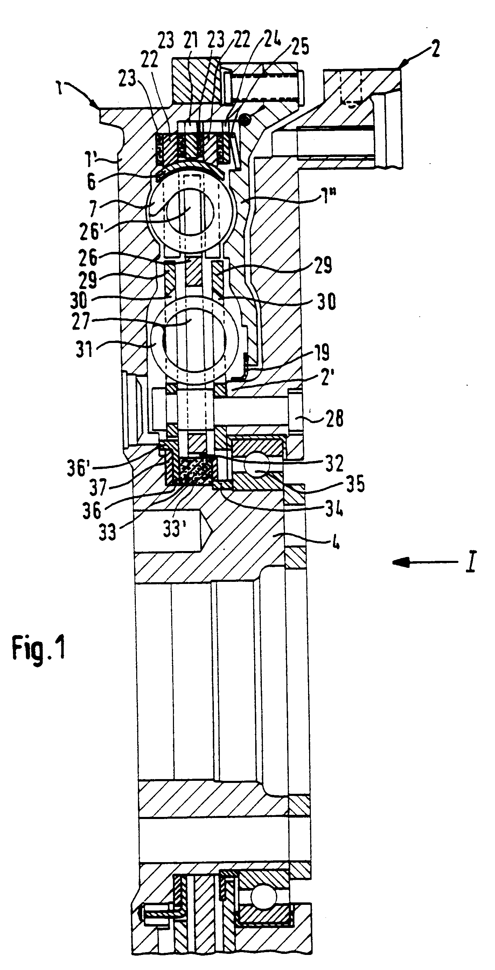

Innerhalb dieses Ringraumes ist an dessen Umfangswand ein Ringteil 21 undrehbar, jedoch axial verschiebbar, gehaltert. Dieses Ringteil 21 besitzt nur relativ geringe Abmessungen in Radialrichtung. Auf beiden Stirnseiten des Ringteiles 21 sind Ringscheiben 22 relativ zum Schwungradelement 1 axial verschiebbar und drehbar angeordnet. Zwischen den Ringscheiben 22 und dem Ringteil 21 sind Reiblamellen 23 eingesetzt. Weitere Reiblamellen 23 sind zwischen der in Fig. 1 linken Ringscheibe 22 und dem Teil 1' des Schwungradelementes 1 sowie zwischen der in Fig. 1 rechten Ringscheibe 22 und einem weiteren Ringteil 24 angeordnet, welches am Teil 1' des Schwungradelementes 1 axial verschiebbar, jedoch undrehbar gehaltert ist und von einer am Teil 1'' des Schwungradelementes 1 abgestützten Ringfeder 25 in Fig. 1 nach links gedrängt wird. Dementsprechend werden die Ringscheiben 22, das Ringteil 21 sowie die Reiblamellen 23 aufeinandergedrückt, so daß die Ringscheiben 22 in Umfangsrichtung des Schwungrades reibschlüssig festgehalten werden bzw. bei größeren Drehmomenten relativ zum Schwungradelement 1 durchdrehen können.

Die Ringscheiben 22 besitzen radial innerhalb des Ringteiles 21 in Umfangsrichtung erstreckte kreisbogenförmige Fenster, in denen langhubige Schraubenfedern 7 mit kreisbogenförmig gekrümmter Schraubenachse, deren Krümmungszentrum in die Achse des Schwungrades fällt, käfigartig gehaltert sind. Dabei suchen sich die Schraubenfedern 7 mit ihren Stirnenden bzw. den darin angeordneten Anschlagstücken 8 gegen die zwischen den genannten Fenstern verbleibenden radialen Stege der Ringscheiben 22 anzulegen.

Auf der nach radial außen weisenden Seite der Schraubenfedern 7 sind in den Fenstern Schalenteile 6 gehaltert, welche die Schraubenfedern 7 nach radial außen gegen Fliehkräfte abstützen.

Axial zwischen den Ringscheiben 22 ist radial innerhalb der Schraubenfedern 7 ein ringförmiges Scheibenteil 26 angeordnet, welches mit nach radial außen weisenden Fortsätzen 26' in die Abstandsräume zwischen in Umfangsrichtung aufeinanderfolgende Schraubenfedern 7 ragt und die Stirnenden der Schraubenfedern 7 bzw. deren Anschlagstücke 8 überlappt. Wenn das Scheibenteil 26 relativ zu den Ringscheiben 22 verdreht wird, werden also die Schraubenfedern 7 zwischen jeweils einem Fortsatz 26' des Scheibenteiles 26 und in Umfangsrichtung gegenüberliegenden radialen Kanten der in den Ringscheiben 22 für die Schraubenfedern 7 angeordneten Fenstern bzw. Ausnehmungen zusammengedrückt.

Das Scheibenteil 26 ist relativ zum Schwungradelement 2 begrenzt drehbar. Die Begrenzung der Drehbarkeit erfolgt mittels im Scheibenteil 26 angeordneter Fenster 27, welche von Bolzen 28 durchsetzt werden, die am Schwungradelement 2 im Bereich des Ringsteges 2' kranzartig angeordnet sind.

Die Bolzen 28 dienen zur Halterung zweier Ringscheiben 29, welche in geringem axialen Abstand vom Scheibenteil 26 auf dessen beiden Stirnseiten mit dem Schwungradelement 2 fest verbunden angeordnet sind. Radial außerhalb des Ringsteges 2' des Schwungradelementes 2 sind in den Ringscheiben 29 in Umfangsrichtung erstreckte Fenster 30 ausgespart, welche im Vergleich zu den Schraubenfedern 7 kurze und steife Schraubenfedern 31 käfigartig aufnehmen. Diese Schraubenfedern 31 besitzen eine im wesentlichen geradlinige Schraubenachse.

Die vorgenannten Fenster 27 im Scheibenteil 26 erstrecken sich hinreichend weit nach radial außen, um die Federn 31 in den Fenster 30 der Ringscheiben 29 haltern zu können. Im Bereich der Federn 31 besitzen die Fenster 30 und 27 in Umfangsrichtung etwa gleiche Abmessungen, so daß die Federn 31 die Ringscheiben 29 sowie das Scheibenteil 26 in eine Mittellage relativ zueineinander zu drängen suchen, bei der die radialen Kanten der Fenster 27 und 30 miteinander - in Achsansicht des Schwungrades - fluchten. Wird das Scheibenteil 26 relativ zu den Ringscheiben 29 gedreht, so werden die Federn 31 jeweils zwischen einer radialen Kante der Fenster 27 und in Umfangsrichtung gegenüberliegenden Kanten der Fenster 30 zusammengepreßt. An seinem das Nabenteil 4 des Schwungradelementes 1 umschließenden Innenumfang besitzt das Scheibenteil 26 Aussparungen 32, welche axiale Fortsätze 33' eines Reibringes 33 mit einem Spiel 2 w in Umfangsrichtung aufnehmen. Dabei ist das Spiel 2 w insgesamt kleiner als das Spiel 2 S der Bolzen 28 in den Fenstern 27. Die Fortsätze 33' liegen mit ihren in Fig. 1 rechten Enden an einem Abstützring 34 mit Winkelprofil an, dessen einer das Nabenteil 4 umschließender Schenkel an der nabenteilseitigen Lagerschale eines Rillenkugellagers 35 anliegt, mit dem das Schwungradelement 2 auf dem Nabenteil 4 des Schwungradelementes 1 drehgelagert ist. Der Reibring 33 wirkt mit seiner von den Fortsätzen 33' abgewandten Stirnseite mit einem Gegenreibring 36 zusammen, welcher auf dem Nabenteil 4 axial verschiebbar angeordnet und mittels abgewinkelter Fortsätze 36' relativ zum Schwungradelement 1 undrehbar festgehalten ist, indem die Fortsätze 36' in entsprechende Aussparungen am Schwungradelement 1 eingreifen. Axial zwischen dem Gegenreibring 36 und dem Schwungradelement 1 bzw. dessen Teil 1' ist eine ringförmige Tellerfeder 37 eingespannt, welche den Gegenreibring 36 gegen den Reibring 33 und den letzteren mit seinen Fortsätzen 33' gegen den Abstützring 34 drängt, welcher dann seinerseits die Lagerschale des Rillenkugellagers 35 auf dem Nabenteil 4 gegen einen am Nabenteil 4 angeordneten Ringflansch spannt. Die Tellerfeder 37 hat also eine Doppelfunktion, d.h. einerseits preßt sie Reibring 33 und Gegenreibring 36 gegeneinander, andererseits sichert die Tellerfeder 37 die Lage der inneren Lagerschale des Rillenkugellagers 35. Zur Erhöhung der Reibung zwischen dem Reibring 33 und dem Gegenreibring 36 können zwischen diesen beiden Teilen noch nicht dargestellte Reiblamellen angeordnet sein.

Sobald die Ringscheibe 29 relativ zum Schwungradelement 2 bzw. den Ringscheiben 29 derart weit verdreht wird, daß das Bewegungsspiel 2 w der Fortsätze 33' in den Aussparungen 22 aufgezehrt wird, nimmt das Scheibenteil 26 bei seiner weiteren Bewegung den Reibring 33 mit, d.h. der weiteren Bewegung des Scheibenteiles 26 relativ zum Schwungradelement 2 wirkt der Reibwiderstand der von den Ringen 33 und 36 gebildeten Rutschkupplung entgegen.

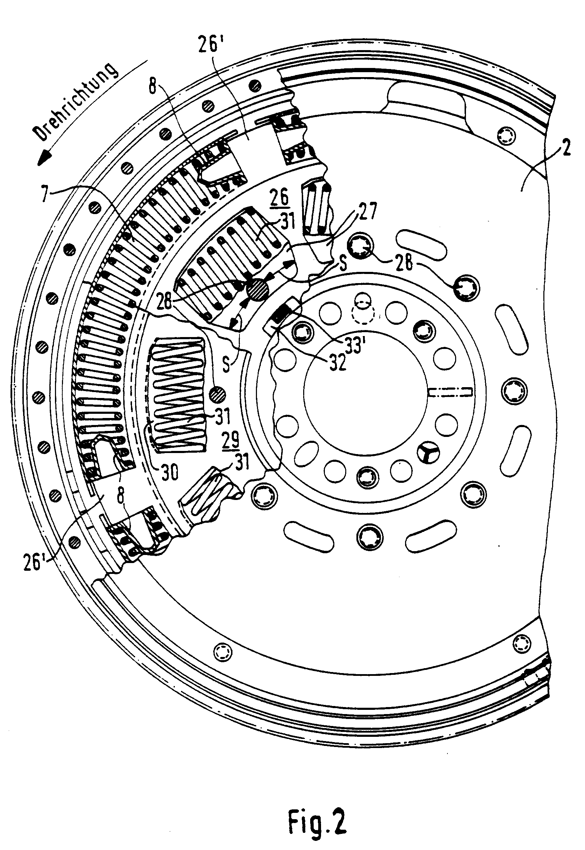

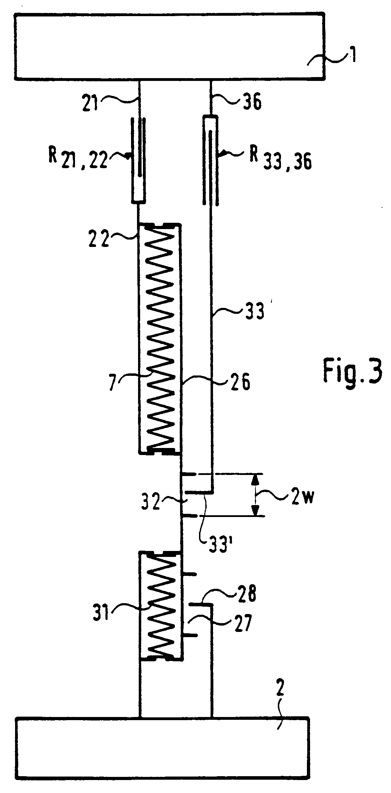

Die Funktion des in den Fig. 1 und 2 dargestellten Schwungrades läßt sich am besten der Fig. 3 entnehmen, in der die Schwungradelemente 1 und 2 als schwere Körper schematisch dargestellt sind, welche sich aneinander annähern bzw. voneinander entfernen können, d.h. die Relativdrehungen zwischen den Schwungradelementen 1 und 2 werden in Fig. 3 als rein translatorische Bewegungen wiedergegeben. Im übrigen haben einander entsprechende Elemente in den Fig. 1 bis 3 die gleichen Bezugszeichen.

Solange relativ schwache Drehmomente zwischen den Schwungradelementen 1 und 2 wirksam sind, bewegen sich die Ringscheiben 22 bei Relativbewegungen zwischen den Schwungradelementen 1 und 2 zusammen mit dem Schwungradelement 1 bzw. dem Ringteil 21, d.h. die reibschlüssige Verbindung R_{21,22} zwischen dem Ringteil 21 und den Ringscheiben 22 arbeitet ohne Schlupf. Entsprechend dem Ausmaß der Relativbewegungen zwischen den Schwungradelementen 1 und 2 werden die Federn 7 und 31 mehr oder weniger stark gestaucht. Gegebenenfalls kann dabei das Spiel 2 w aufgezehrt werden, welches den Fortsätzen 33' des Reibringes 33 innerhalb der Aussparungen 32 an dem Scheibenteil 26 zur Verfügung steht. Je nach den zwischen den Schwungradelementen 1 und 2 wirksamen Drehmomenten wird dann aufgrund des Reibschlusses R_{33,36} zwischen dem Reibring 33 und dem Gegenreibring 36 eine weitere Relativbewegung zwischen dem Schwungradelement 1 und dem Scheibenteil 26 in einer Bewegungsrichtung verhindert, so daß die Federn 7 zunächst nicht weiter gestaucht werden können. Bei größer werdenden Drehmomenten wird dann der Reibschluß R_{33,36} überwunden, d.h. der Reibring 33 rutscht relativ zum Gegenreibring 36 durch, wobei die Federn 7 etwas weiter gestaucht werden. Bei Umkehr der relativen Bewegungsrichtung der Schwungradelemente 1 und 2 kann sich dann das Scheibenteil 26 zunächst um einen Weg 2 w bewegen, bevor der Reibschluß R_{33,36} wiederum wirksam wird.

Bei sehr starken Drehmomenten zwischen den Schwungradelementen 1 und 2 kann auch der Reibschluß R_{21,22} zwischen den Ringscheiben 22 und dem Ringteil 21 mit Schlupf arbeiten, wodurch das maximale, zwischen den Schwungradelementen 1 und 2 übertragbare Drehmoment begrenzt wird.

Die Beweglichkeit des Scheibenteiles 26 relativ zum Schwungradelement 2 wird durch Zusammenwirken der Bolzen 28 mit den Fenstern 27 des Scheibenteiles 26 begrenzt. Dadurch wird sicher verhindert, daß die Federn 31 auf Block zusammengedrückt werden können.

Eine Besonderheit des beschriebenen Schwungrades liegt darin, daß die Federn 7 mit fliehkraftabhängiger Reibung arbeiten. Bei hohen Drehzahlen können die Federn 7 näherungsweise als starre Bauteile angesehen werden, so daß nur noch die Federn 31 als elastische Elemente zwischen den Schwungradelementen 1 und 2 wirksam sind.

Abweichend von der oben beschriebenen Ausführungsform ist es auch möglich, daß die Ringscheiben 22 relativ zum Schwungradelement 1 nur begrenzt beweglich sind. Dies kann beispielsweise dadurch erreicht werden, daß an den Ringscheiben 22 nach radial außen ragende Fortsätze oder Vorsprünge angeordnet sind, welche mit Gegenvorsprüngen bzw. Ausnehmungen am Schwungradelement 1 zusammenwirken und die maximale Verdrehung der Ringscheiben 22 relativ zum Schwungradelement 1 begrenzen.

Darüber hinaus kann das Scheibenteil 26 radial zwischen den langhubigen Federn 22 und den kurzhubigen Federn 31 unterteilt sein, derart, daß die Teilstücke des Scheibenteiles 26 gegen einen Widerstand relativ zueinander begrenzt verdreht werden können. Dazu können die Teilstücke des Scheibenteiles 26 ähnlich wie die Ringscheiben 10 und 11 in den Fig. 1 und 2 reibschlüssig und mit Spiel formschlüssig miteinander gekoppelt sein.

## Patentansprüche

1. Geteiltes Schwungrad mit
- zwei gleichachsigen Schwungradelementen (1,2), auf die die Schwungradmassen im wesentlichen aufgeteilt sind, wobei am einen Schwungradelement (1) ein zentraler Axialfortsatz bzw. Nabenteil (4) angeordnet ist, auf dem unter Zwischenschaltung eines Lagers (35) das andere Schwungradteil (2) drehgelagert ist,
- einer zwischen die Schwungradelemente (1,2) geschalteten Federanordnung mit einer Federgruppe aus langhubigen Schraubenfedern (7), welche eine kreisbogenförmige Schraubenachse mit in die Schwungradachse fallenden Krümmungszentrum aufweisen, nicht bzw. vernachlässigbar vorgespannt sind und mit fliehkraftabhängiger Reibung arbeiten, indem diese Federn (7) von der Fliehkraft gegen die Federn (7) relativ zur Schwungradachse nach radial außen abstützende Lagerflächen (6) gedrängt werden, wobei die Federkonstanten dieser Federn (7) derart bemessen sind, daß die bei geringer Motordrehzahl auftretenden Schwingungen im überkritischen Bereich liegen, sowie
- einer zwischen einem Schwungradelement (1) und einem Widerlagerteil (22) der Federanordnung angeordneten kraftschlüssigen Kupplung (21,22,23), welche in Reihe zur Federanordnung angeordnet ist,
**dadurch gekennzeichnet,**
- daß zusätzlich zu der aus den langhubigen Federn (7) bestehenden Federgruppe eine dazu in Reihe geschaltete weitere Federgruppe mit relativ kurzhubigen Federn (31) angeordnet ist, welche mit fliehkraftunabhängiger Reibung arbeiten,
- daß die langhubigen Federn (7) reibschlüssig mit dem einen Schwungradelement (1) gekuppelte Widerlager (22) besitzen,
- daß in einer Ebene axial zwischen den Widerlagern (22) eine Zwischenträgerscheibe (26) angeordnet ist, welche mit radialen Teilen die Stirnenden der langhubigen Federn (7) überlappt und über die anderen Federn (31) mit dem anderen Schwungradelement (2) gekoppelt sowie mit einem Reibring (33) bzw. ringförmig angeordneten Reibteilen verbunden ist, indem der Reibring (33) bzw. die Reibteile mit in Achsrichtung des Schwungrades erstreckten Fortsätzen (33') in Aussparungen (32) der Zwischenträgerscheibe (26) eingreifen,
- daß die innere Lagerschale des Lagers (35) axial gegen einen am Axialfortsatz bzw. Nabenteil (4) angeordneten Ringsteg, Ringflansch od.dgl. gespannt ist, indem der Reibring (33) bzw. die Reibteile axial zwischen zwei auf dem Axialfortsatz bzw. Nabenteil (4) axial verschiebbaren Druckringen bzw. weiteren Reibringen (34,36) angeordnet sind, und
- daß einer dieser Druckringe (34,36) bzw. weiteren Reibringe mittels eines Tellerfederringes (37) in Richtung des jeweils anderen Druckringes bzw. Reibringes (36,34) gespannt ist, wobei der Tellerfederring (37) entweder zwischen der inneren Lagerschale des Lagers (35) und dem dazu benachbarten einen Druckring (34) bzw. einen weiteren Reibring oder zwischen einem Teil (1') des einen Schwungradelementes (1) und dem anderen Druckring (36) bzw. anderen weiteren Reibring eingespannt ist, so daß der Reibring (33) sowie die Druckringe (34,36) bzw. die weiteren Reibringe unter gleichzeitiger Sicherung der Lage der Lagerschale axial gegeneinander gespannt werden.

2. Geteiltes Schwungrad nach Anspruch 1,
**dadurch gekennzeichnet,**
daß die beiden Federgruppen (7,31) radial übereinander angeordnet sind.

3. Geteiltes Schwungrad nach einem der Ansprüche 1 oder 2,
**dadurch gekennzeichnet,**
daß die langhubigen Federn (7) am einen Schwungradelement (1) innerhalb eines im Querschnitt U- bzw. kreisförmigen Bettes zwischen in Umfangsrichtung voneinander beabstandeten Widerlagerstücken aufgenommen sind, welche die Stirnenden dieser Federn (7) beidseitig einer die Schraubenachse enthaltenden Radialebene des Schwungrades überlappen, und daß als Widerlagerteil axial zwischen den Widerlagerstücken eine mit dem anderen Schwungradteil (2) nachgiebig gekoppelte Ringscheibe angeordnet ist, welche im Bereich der langhubigen Federn (7) Aussparungen und in Umfangsrichtung zwischen den Federn (7) radiale Bereiche besitzt, die die Stirnenden der Federn (7) überlappen.

4. Geteiltes Schwungrad nach einem der Ansprüche 1 bis 3,
**dadurch gekennzeichnet,**
daß die Ringscheibe mit einer am anderen Schwungradteil (2) befestigten weiteren Ringscheibe mit Spiel in Umfangsrichtung formschlüssig gekoppelt ist.

5. Geteiltes Schwungrad nach Anspruch 4,
**dadurch gekennzeichnet,**
daß die beiden Ringscheiben mit radialen Vorsprüngen und Aussparungen mit Spiel in Umfangsrichtung ineinandergreifen, und daß Reiblamellen, welche beide Ringscheiben überlappen und an den Ringscheiben gehaltert sind, gegen die Stirnseiten der Ringscheiben angedrückt werden.

6. Geteiltes Schwungrad nach einem der Ansprüche 1 bis 5,
**dadurch gekennzeichnet,**
daß die Widerlager (Ringscheiben 22) relativ zum einen Schwungradelement (1) begrenzt beweglich sind.

7. Geteiltes Schwungrad nach einem der Ansprüche 1 bis 6,
**dadurch gekennzeichnet,**
daß die beiden Widerlager als beidseitig der Schraubenfederachsen angeordnete Ringscheiben (22) mit die Stirnenden der Federn (7) überlappenden radialen Bereichen ausgebildet sind, und daß im Querschnitt kreisbogenförmige, jeweils eine langhubige Feder nach radial außen abstützende Schalenteile (6) an den Ringscheiben (22) gehaltert sind.

8. Geteiltes Schwungrad nach einem der Ansprüche 1 bis 7,
**dadurch gekennzeichnet,**
daß die Zwischenträgerscheibe (26) axial zwischen zwei am anderen Schwungradteil (2) angeordneten Scheiben (29) angeordnet ist, welche mehrere zur Schwungradachse tangentiale Ausschnitte bzw. Fenster (30) besitzen, in denen die Federn (31) der anderen Federgruppe käfigartig aufgenommen sind, und daß an der Zwischenträgerscheibe (26) zwischen den Federn (31) dieser Federgruppe radiale Speichen bzw. Fortsätze od.dgl. angeordnet sind.

9. Geteiltes Schwungrad nach einem der Ansprüche 1 bis 8,
**dadurch gekennzeichnet,**
daß die Zwischenträgerscheibe (26) gegenüber dem anderen Schwungradteil (2) begrenzt drehbar ist, indem zur Halterung der Scheiben (29) dienende Bolzen (28) mit Speichen bzw. Fortsätzen od.dgl. der Zwischenträgerscheibe (26) zusammenwirken.

10. Geteiltes Schwungrad nach einem der Ansprüche 1 bis 9,
**dadurch gekennzeichnet,**
daß die Fortsätze (33') in den Aussparungen (32) mit Spiel in Umfangsrichtung und/oder der Gegenreibring (36) mit Spiel in Umfangsrichtung angeordnet bzw. gehaltert sind.

11. Geteiltes Schwungrad nach einem der Ansprüche 1 bis 10,
**dadurch gekennzeichnet,**
daß das die langhubigen Schraubenfedern (7) aufnehmende Bett als Teil einer mit Schmiermittel gefüllten Ringkammer angeordnet ist.

## Claims

1. Split flywheel with
- two equiaxial flywheel elements (1, 2), to which the flywheel masses are essentially apportioned, there being arranged on one flywheel element (1) a central axial extension or hub part (4), on which the other flywheel element (2) is rotationally mounted, with a bearing (35) being interposed,
- a spring arrangement inserted between the flywheel elements (1, 2) having a spring group consisting of long-stroke helical springs (7) which have a helical axis in the form of an arc of a circle, with a centre of curvature falling into the flywheel axis, are non-prestressed or negligibly prestressed and work by friction dependent on centrifugal force in that these springs (7) are urged by the centrifugal force against bearing faces (6) supporting the springs (7) radially outwards relative to the flywheel axis, the spring constants of these springs (7) being calculated in such a way that the vibrations occurring at a low engine speed are in the supercritical range, and
- a non-positive coupling (21, 22, 23) which is arranged between a flywheel element (1) and an abutment part (22) of the spring arrangement and is arranged in series with the spring arrangement,
characterized
- in that, in addition to the spring group consisting of the long-stroke springs (7), there is a further spring group connected in series thereto and having relatively short-stroke springs (31) which work by friction independent of centrifugal force,
- in that the long-stroke springs (7) possess abutments (22) coupled frictionally to one flywheel element (1),
- in that arranged axially in one plane between the abutments (22) is an intermediate carrier disc (26) which overlaps the end faces of the long-stroke springs (7) by means of radial parts and which is coupled to the other flywheel element (2) via the other springs (31) and is connected to a friction ring (33) or annularly arranged friction parts in that the friction ring (33) or the friction parts engage into recesses (32) of the intermediate carrier disc (26) by means of extensions (33') extending in the axial direction of the flywheel,
- in that the inner bearing shell of the bearing (35) is clamped axially against an annular web, annular flange or the like arranged on the axial extension or hub part (4), in that the friction ring (33) or the friction parts are arranged axially between two pressure rings or further friction rings (34, 36) which are axially displaceable on the axial extension or hub part (4), and
- in that one of these pressure rings (34, 36) or further friction rings is tensioned in the direction of the respective other pressure ring or friction ring (36, 34) by means of a cup-spring ring (37), the cup-spring ring (37) being clamped either between the inner bearing shell of the bearing (35) and the one pressure ring (34) adjacent thereto or one further friction ring, or between one part (1') of the one flywheel element (1) and the other pressure ring (36) or the other further friction ring, with the result that the friction ring (33) and the pressure rings (34, 36) or the further friction rings are clamped axially against one another with the position of the bearing shell being simultaneously secured.

2. Split flywheel according to Claim 1, characterized in that the two spring groups (7, 31) are arranged radially above one another.

3. Split flywheel according to either of Claims 1 or 2, characterized in that the long-stroke springs (7) are received on one flywheel element (1), within a bed of U-shaped or circular cross-section, between abutment pieces which are spaced from one another in the circumferential direction and which overlap the end faces of these springs (7) on both sides of a radial plane of the flywheel containing the helical axis, and in that arranged axially as an abutment part between the abutment pieces is an annular disc which is coupled compliantly to the other flywheel element (2) and which possesses, in the region of the long-stroke springs (7), recesses and, in the peripheral direction between the springs (7), radial regions which overlap the end faces of the springs (7).

4. Split flywheel according to one of Claims 1 to 3, characterized in that the annular disc is coupled positively with play in the circumferential direction to a further annular disc fastened to the other flywheel element (2).

5. Split flywheel according to Claim 4, characterized in that the two annular discs engage into one another with play in the circumferential direction by means of radial projections and recesses, and in that friction lamellae which overlap the two annular discs and which are retained on the annular discs are pressed against the end faces of the annular discs.

6. Split flywheel according to one of Claims 1 to 5, characterized in that the abutments (annular discs 22) are movable to a limited extent in relation to one flywheel element (1).

7. Split flywheel according to one of Claims 1 to 6, characterized in that the two abutments are designed as annular discs (22) arranged on both sides of the helicalspring axes, with radial regions overlapping the end faces of the springs (7), and in that shell parts (6) of a cross-section in the form of an arc of a circle and each supporting a long-stroke spring radially outwards are retained on the annular discs (22).

8. Split flywheel according to one of Claims 1 to 7, characterized in that the intermediate carrier disc (26) is arranged axially between two discs (29) arranged on the other flywheel element (2) and possessing several cutouts or apertures (30) which are tangential relative to the flywheel axis and in which the springs (31) of the other spring group are received in a cage-like manner, and in that radial spokes or extensions or the like are arranged on the intermediate carrier disc (26) between the springs (31) of this spring group.

9. Split flywheel according to one of Claims 1 to 8, characterized in that the intermediate carrier disc (26) is rotatable to a limited extent in relation to the other flywheel element (2), in that bolts (28) serving for retaining the discs (29) interact with spokes or extensions or the like of the intermediate carrier disc (26).

10. Split flywheel according to one of Claims 1 to 9, characterized in that the extensions (33') are arranged or retained in the recesses (32) with play in the circumferential direction and/or the counter friction ring (36) is arranged or retained with play in the circumferential direction.

11. Split flywheel according to one of Claims 1 to 10, characterized in that the bed receiving the longstroke helical springs (7) is arranged as part of an annular chamber filled with lubricant.

## Revendications

1. Volant divisé comportant
- deux éléments coaxiaux (1,2), entre lesquels sont réparties pour l'essentiel les masses du volant et sur l'un (1) desquels est disposé un prolongement axial ou élément formant moyeu (4) central, sur lequel l'autre élément (2) du volant est monté rotatif moyennant l'interposition d'un palier (35),
- un dispositif à ressorts, monté entre les éléments (1,2) du volant et comportant un groupe de ressorts constitué par des ressorts hélicoïdaux (7) à course élastique de grande longueur, qui possèdent un axe en forme d'arc de cercle possédant un centre de coubure situé sur l'axe du volant, ne sont pas précontraints ou sont précontraints de façon négligeable et travaillent avec une friction qui dépend de la force centrifuge par le fait que ces ressorts (7) sont repoussés par la force centrifuge, qui agit contre ces ressorts, par rapport à l'axe du volant vers des surfaces de support (6) qui réalisent un appui radial extérieur, les constantes d'élasticité de ces ressorts (7) étant dimensionnées de telle sorte que les oscillations, qui apparaissent pour une faible vitesse de rotation du moteur, se situent dans une zone souscritique, et
- un accouplement (21,22,23) réalisant une transmission de force, qui est disposé entre un élément (1) du volant et un élément de butée (22) du dispositif à ressorts et qui est disposé en série avec le dispositif à ressorts,
caractérisé en ce
- qu'en plus du groupe de ressorts constitué par les ressorts (7) possédant une longue course élastique, il est prévu un autre groupe de ressorts monté en série avec le précédent et comportant des ressorts (31) possédant une course élastique relativement faible et qui travaillent avec une friction qui dépend de la force centrifuge,
- que les ressorts (7) qui possèdent une longue course élastique comportent une butée (22) accouplée selon une liaison par frottement à un élément (1) du volant,
- que dans un plan axial situé entre les butées (22) est disposé un disque de support intermédiaire (26), dont des parties radiales sont en chevauchement sur les extrémités frontales des ressorts (7) possédant de longues courses élastiques et qui est accouplé à l'autre élément (2) du volant par l'intermédiaire des autres ressorts (30) et est raccordé à un disque de frottement (33) ou à des éléments de frottement disposés annulairement, la bague de frottement (33) ou les éléments de frottement s'engageant, par des prolongements (33') qui s'étendent dans la direction axiale du volant, dans des renfoncements (32) du disque de support intermédiaire (26),
- que la coquille intérieure du coussinet du palier (35) est serrée axialement contre une barrette annulaire, bride annulaire ou analogue, disposée sur le prolongement axial ou l'élément formant moyeu (4), par le fait que la bague de frottement (33) ou les éléments de frottement sont disposés axialement entre deux bagues de pression ou d'autres bagues de frottement (34,36), déplaçables axialement sur le prolongement axial ou l'élément formant moyeu (4), et
- que l'une de ces bagues de pression (34,36) ou de ces autres bagues de frottement est serrée au moyen d'un anneau en forme de ressort Belleville (37) en direction de l'autre bague de pression ou bague de frottement (36,34), la bague en forme de ressort Belleville (37) étant serrée soit entre la coquille intérieure du coussinet du palier (35) et une bague de serrage (34) qui en est voisine ou une autre bague de friction, soit entre une partie (1') d'un élément (1) du volant et l'autre bague de pression (36) ou une autre bague de frottement, de sorte que la bague de frottement (33) ainsi que les bagues de pression (34,36) ou les autres bagues de frottement sont serrées axialement l'une contre l'autre moyennant le blocage simultané de la coquille du coussinet du palier en position.

2. Volant divisé selon la revendication 1, caractérisé en ce que les deux groupes de ressorts (7,31) sont superposés radialement.

3. Volant divisé selon l'une des revendications 1 ou 2, caractérisé en ce que les ressorts (7) qui possèdent de longues courses élastiques sur un élément (1) du volant sont logés à l'intérieur d'un lit en forme de U ou de forme circulaire en coupe transversale entre les éléments de butée qui sont distants l'un de l'autre dans la direction circonférentielle et qui chevauchent les extrémités frontales de ces ressorts (7) des deux côtés d'un plan radial du volant, qui passe par l'axe des ressorts hélicoïdaux, et qu'un disque annulaire couplé, de manière à pouvoir céder, à l'autre élément (2) du volant est disposé axialement, en tant que partie de butée entre les éléments de butée, ce disque annulaire possédant, dans la zone des ressorts (7) qui possèdent une longue course élastique, des évidements et, dans la direction circonférentielle entre les ressorts (7), des zones radiales, qui chevauchent les extrémités frontales des ressorts (7).

4. Volant divisé selon l'une des revendications 1 à 3, caractérisé en ce que le disque annulaire est accouplé avec jeu dans la direction circonférentielle, selon une liaison par formes complémentaires, à un autre disque annulaire fixé sur l'autre élément (2) du volant.

5. Volant divisé selon la revendication 4, caractérisé en ce que les deux disques annulaires s'emboîtent par des appendices saillants et des éléments radiaux, avec jeu, dans la direction circonférentielle et que des disques de frottement, qui sont en chevauchement sur ces deux disques annulaires et sont retenus sur ces derniers, sont serrés contre les faces frontales des disques annulaires.

6. Volant divisé selon l'une des revendications 1 à 5, caractérisé en ce que les butées (disques annulaires 22) sont déplaçables de façon limitée par rapport à un élément (1) du volant.

7. Volant divisé selon l'une des revendications 1 à 6, caractérisé en ce que les deux butées sont réalisées sous la forme de deux disques annulaires (22), qui sont disposés des deux côtés des axes des ressorts hélicoïdaux et comportent des zones radiales qui chevauchent les extrémités frontales des ressorts (7), et que des éléments de coque (6), qui possèdent une forme d'arc de cercle en coupe transversale et supportent chacun radialement vers l'extérieur un ressort possédant une longue course élastique, sont retenus sur les disques annulaires (22).

8. Volant divisé selon l'une des revendications 1 à 7, caractérisé en ce que le disque de support intermédiaire (26) est disposé axialement entre deux disques (29) qui sont disposés sur l'autre élément (2) du volant et qui possèdent plusieurs ouvertures ou fenêtres (30), qui sont tangentielles par rapport à l'axe du volant et dans lesquelles les ressorts (31) de l'autre groupe de ressorts sont logés comme dans une cage, et que des rayons ou prolongements radiaux ou analogues sont disposés sur le disque de support intermédiaire (26) entre les ressorts (31) de ce groupe de ressorts.

9. Volant divisé selon l'une des revendications 1 à 8, caractérisé en ce que le disque de support intermédiaire (26) peut tourner de façon limitée par rapport à l'autre élément (2) du volant par le fait que des boulons (28), qui servent à retenir les disques (29), coopèrent avec des rayons ou des prolongements ou analogues du disque de support intermédiaire (26).

10. Volant divisé selon l'une des revendications 1 à 9, caractérisé en ce que les prolongements (33') sont disposés ou retenus avec jeu dans la direction circonférentielle et/ou que la bague de frottement antagoniste (36) est disposée ou retenue avec jeu dans la direction circonférentielle.

11. Volant divisé selon l'une des revendications 1 à 10, caractérisé en ce que le lit, qui reçoit les ressorts hélicoïdaux (7), qui possèdent une longue course élastique, est prévu en tant que partie d'une chambre annulaire remplie d'un lubrifiant.
